# EUROPÄISCHE PATENTSCHRIFT

(11) **EP 2 150 079 B1**
(45) Veröffentlichungstag und Bekanntmachung des Hinweises auf die Patenterteilung: **25.04.2012**
(21) Anmeldenummer: 09166970.5
(22) Anmeldetag: 31.07.2009
(51) Int. Cl.: H04W 8/18

(54) **Verfahren zum Handhaben eines Rufaufbaus und Anordnung zum Handhaben abgehender Mobilfunkverbindungen**
Method for handling a call setup and assembly for handling outgoing mobile radio connections
Procédé de gestion d'établissement d'appel et arrangement de gestion de liaisons radio mobiles sortantes

(30) Priorität: 31.07.2008 DE 102008035606
(43) Veröffentlichungstag der Anmeldung: 03.02.2010
(73) Patentinhaber: Vodafone Holding GmbH, 40213 Düsseldorf (DE)
(72) Erfinder: Schmelzer, Philipp, 40233 Düsseldorf (DE); Alker, Stephan, 40822 Mettmann (DE); Neusius, Alfons, 40880 Ratingen (DE)
(74) Vertreter: Kreutzer, Ulrich

(56) Entgegenhaltungen:
- EP-A1- 1 626 602
- EP-A2- 1 091 604
- EP-A2- 1 860 595
- DE-A1- 10 054 379

## Beschreibung

### TECHNISCHES GEBIET DER ERFINDUNG

Die Erfindung betrifft allgemein das Betreiben eines Mobilfunknetzes und insbesondere Verfahren und Anordnungen zum Handhaben und zur Abrechnung abgehender Mobilfunkverbindungen in einem Mobilfunknetz. Genauer gesagt betrifft die Erfindung ein Verfahren und eine Anordnung zum Handhaben des Rufaufbaus einer von einem mobilen Kommunikationsendgerät eines Kunden eines Mobilfunkanbieters in einem Kommunikationsnetz abgehenden Mobilfunkverbindungen, wobei der Kunde über mehrere Teilnehmeridentifikationsmodule verfügt, in denen jeweils wenigstens eine Teilnehmeridentifikationsnummer gespeichert ist, wobei jeder Teilnehmeridentifikationsnummer eine Rufnummer zugeordnet ist, wobei jeder Rufnummer ein Teilnehmerprofil zugeordnet ist und wobei eines der Teilnehmerprofile eine Dienstermächtigung zur Teilnahme an zusätzlichen Diensten enthält. Die Erfindung betrifft auch ein Verfahren und eine Anordnung zur Abrechnung der erfindungsgemäß aufgebauten abgehenden Mobilfunkverbindungen.

### HINTERGRUND DER ERFINDUNG

Auf dem Gebiet der Erfindung sind unterschiedliche Verfahren und Anordnungen zum Handhaben und zur Abrechnung abgehender Mobilfunkverbindungen bekannt, die sich mit dem Problem beschäftigen, daß ein Kunde eines Mobilfunkanbieters über verschiedene Kommunikationsendgeräte, wie z.B ein Mobiltelefon, einen mobilen Computer mit Mobilfunkmodul und ein fest eingebautes Autotelefon, verfügt, aber nur unter einer einzigen Rufnummer auf mehreren Kommunikationsendgeräten erreichbar sein möchte. Zudem besteht häufig der Wunsch, bei der Abrechnung abgehender Mobilfunkverbindungen zwischen zwei Arten von Verbindungen zu unterscheiden, insbesondere zwischen beruflich und privat genutzten Verbindungen.

Die Lösung dieser Probleme ist nicht trivial, denn die in den jeweiligen Kommunikationsnetzen verwendeten Standards setzen den Mobilfunkanbietern, teilweise zur Erfüllung bestimmter gesetzlicher Erfordernisse, teilweise zur Ermöglichung der Interoperabilität der verschiedenen Elemente eines Kommunikationsnetzes überhaupt, enge Grenzen insbesondere hinsichtlich der Verwendung und des Aufbaus von Rufnummer, Teilnehmeridentifikationsnummern und Teilnehmeridentifikationsmodul. So läßt es z.B. das Sicherheitskonzept des GSM-Standards nicht zu, daß zwei identische Teilnehmeridentifikationsmodule mit identischen Teilnehmeridentifikationsnummern und Authentifikationsschlüsseln hergestellt und in Betrieb genommen werden können.

Zur zumindest partiellen Lösung der genannten Probleme schlägt die DE 43 17 143 A1 ein Verfahren zum Betreiben eines Mobilfunknetzes vor, wobei der Kunde eines Mobilfunkanbieters über zwei oder mehr Teilnehmeridentifikationsmodule (nachfolgend auch kurz SIM-Karten genannt) verfügt, in denen jeweils eine Teilnehmeridentifikationsnummer (nachfolgend auch kurz IMSI genannt) gespeichert ist, denen eine Rufnummer (nachfolgend auch kurz MSISDN genannt) zugeordnet ist, wobei in einem sogenannten Heimatregister (Home Location Register - HLR), also einer Datenbank, die zur Speicherung aller wichtigen Kundendaten dient, eine Verlinkung (in der Regel über entsprechende Einträge in einer Tabelle) der den beiden SIM-Karten zugeordneten Datensätze dergestalt stattfindet, daß ein Anrufer unter einer einzigen Rufnummer verschiedene Kommunikationsendgeräte, in denen sich jeweils eine der SIM-Karten des Kunden befindet, erreichen kann, wobei gemäß der Lehre dieser Druckschrift vorgesehen ist, daß immer dasjenige Kommunikationsendgerät erreicht wird, das als letztes aktiviert wurde. Verfügt der Kunde also z.B. über zwei Mobiltelefone, so wird gemäß der Lehre dieser Druckschrift ein Anruf immer zu demjenigen Mobiltelefon geleitet, das zuletzt aktiviert wurde. Eine Unterscheidung zwecks Erstellung gesonderter Abrechnungen für berufliche und private Telefonate ist dabei nur dadurch möglich, daß der Kunde eine der SIM-Karten konsequent für geschäftliche, die andere konsequent für private Telefonate nutzt, denn während - wie oben beschrieben - für eingehende Rufe eine einzige Rufnummer genutzt wird, wird bei abgehenden Rufen die tatsächliche, dem Kunden oft unbekannte MSISDN aufgezeichnet, die der gerade verwendeten SIM-Karte über die jeweilige IMSI zugeordnet ist. Dies erfordert entweder den lästigen Austausch der SIM-Karten oder aber das Verwenden zweier Mobiltelefone. Beides ist für den Kunden sehr unpraktisch.

Um diese Nachteile zu überwinden, schlägt die EP 1 860 595 A2 eine Chipkarte vor, auf welcher mindestens zwei Identitäten und/oder Kennungen gespeichert sind, wobei mit einem Aktivierungsmechanismus zwischen den Identitäten gewechselt werden kann.

Zur Lösung des Problems der gesonderten Erfassung privater und geschäftlicher Telefonate schlägt die EP 1 091 604 A2 ein Verfahren zum Betreiben eines Kommunikationsendgerätes vor, wobei dem Kommunikationsendgerät (wiederum über eine SIM-Karte) eine Teilnehmeridentifikationsnummer zugeordnet ist, wobei der Teilnehmeridentifikationsnummer mindestens zwei Rufnummern zugeordnet sind und jeder Rufnummer ein Teilnehmerprofil zugeordnet ist. Eine Dienstelogik in einem Kommunikationsnetz entscheidet dann, welches Teilnehmerprofil bei einem Ruf zu oder von diesem Kommunikationsendgerät angewendet wird. Bei abgehenden Rufen kann der Nutzer mit der Wählprozedur, beispielsweise mit einem Sonderzeichen wie "*" oder "#" am Anfang oder am Ende der gewählten Rufnummer, entscheiden, in welche Kategorie (beruflich oder privat) der aktuelle Ruf fallen soll.

Das in der genannten EP 1 091 604 A2 beschriebene Verfahren ermöglicht vorteilhaft die (kostenmäßige) Trennung beruflicher und privater Telefonate, setzt aber verschiedene Funktionalitäten voraus, die in vielen Kommunikationsnetzen die durch die jeweiligen Standards gesetzten Grenzen überschreiten. So ist z.B. das Wählen eines Sonderzeichens wie des in der EP 1 091 604 A2 zur Unterscheidung beruflicher und privater Telefonate vorgeschlagenen "*" gemäß GSM-Standard überhaupt nicht möglich. Das Wählen einer Rufnummer wie *02034499080 führte vielmehr zu einer Fehlermeldung, wenn der Kunde nicht besondere Dienste abonniert hat.

Um die genannten Grenzen des jeweiligen Standards, z.B. des GSM-Standards, überschreiten zu können, muß in dem Teilnehmeridentifikationsprofil vermerkt sein, daß der Kunde zur Teilnahme an bestimmten zusätzlichen Diensten berechtigt ist, was nachfolgend kurz als "Dienstermächtigung" bezeichnet wird. Bei solchen Diensten kann es sich insbesondere um die sogenannten CAMEL-Dienste handeln, also um Dienste außerhalb des eigentlichen Standards, so daß der Kunde bei Nutzung dieser Dienste quasi nach Art eines VPN (Virtual Private Network) über das Kommunikationsnetz mit einer die jeweiligen Dienste ermöglichenden Dienstzentrale (Service Control Point - SCP) verbunden wird.

Es hat sich nun gezeigt, daß die Verwaltung dieser Zusatzdienste und insbesondere das Versehen aller den verschiedenen Rufnummern eines Kunden zugeordneten Teilnehmerprofile mit der Dienstermächtigung sehr aufwendig sind. Insbesondere ist auch die in der EP 1 091 604 A2 beschriebene Zuordnung von zwei Rufnummern zu einer Teilnehmeridentifikationsnummer problematisch. So kann es sein, daß sich der Kunde im Empfangsbereich eines Kommunikationsunternetzes aufhält, das überhaupt nicht die Zusatzdienste erlaubt, das also z.B. über die genannte CAMEL-Funktionalität gar nicht verfügt, in das sich aber Kunden mit einer ein-eindeutigen Zuordnung von MSISDN zu IMSI einwählen können. Auch ist es aus abrechnungstechnischen Gründen erwünscht, jede IMSI eindeutig identifizieren zu können.

### AUFGABE UND ZUSAMMENFASSUNG DER ERFINDUNG

Der Erfindung liegt die Aufgabe zugrunde, Verfahren und Anordnungen zur Handhabung und zur Abrechnung abgehender Mobilfunkverbindungen für den Fall anzugeben, daß ein Kunde eines Mobilfunkanbieters über mehrere SIM-Karten verfügt, wobei zumindest einige der Kommunikationsendgeräte, in denen die SIM-Karten verwendet werden, unter einer gemeinsamen einheitlichen Rufnummer erreichbar sein sollen und wobei zwischen verschiedenen Abrechnungsarten bei abgehenden Mobilfunkverbindungen unterschieden werden können soll, beispielsweise also berufliche von privat genutzten Mobilfunkverbindungen getrennt werden können sollen.

Die Aufgabe wird hinsichtlich eines Verfahrens und einer Anordnung zur Handhabung eines Rufaufbaus abgehender Mobilfunkverbindungen von einem Verfahren mit den Merkmalen des Anspruchs 1 bzw. einer Anordnung mit den Merkmalen des Anspruchs 5 gelöst. Die jeweiligen Unteranspruche betreffen vorteilhafte Aus- bzw. Durchführungsformen.

Weitere Einzelheiten und Vorteile der Erfindung ergeben sich aus der nachfolgenden rein beispielhaften und nicht-beschränkenden Beschreibung eines Ausführungsbeispiels in Verbindung mit der Zeichnung.

### KURZE BESCHREIBUNG DER ZEICHNUNG

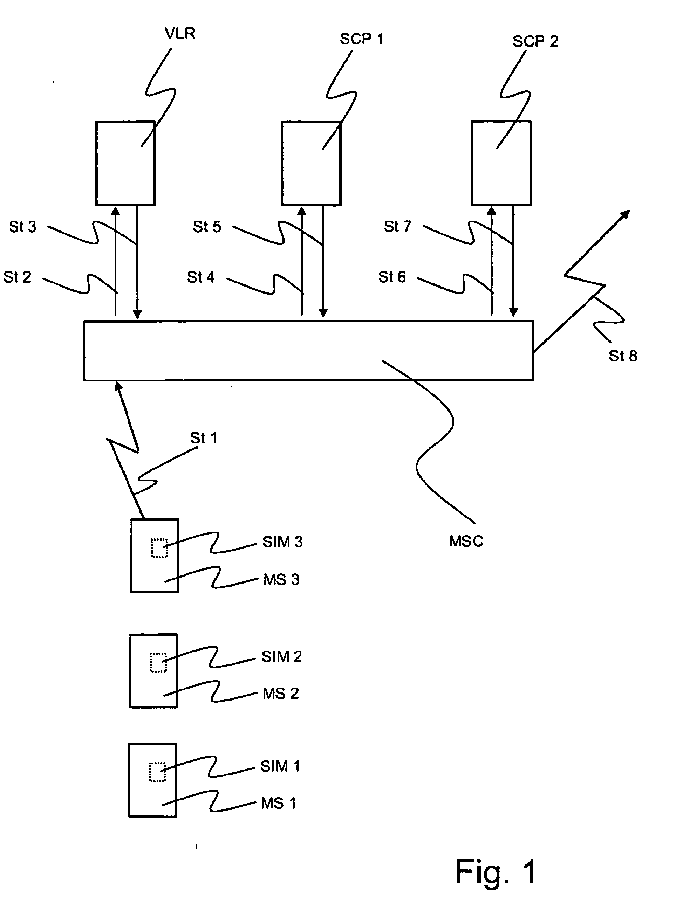

- Fig. 1: zeigt schematisch die grundsätzliche Architektur einer erfindungsgemäßen Anordnung und verdeutlicht auch den Ablauf der einzelnen erfindungsgemäßen Verfahrensschritte.

### BESCHREIBUNG EINER BEVORZUGTEN AUSFÜHRUNGSFORM

In der Fig. 1 ist eine erfindungsgemäße Anordnung zum Handhaben und zur Abrechnung des Rufaufbaus von einem mobilen Kommunikationsendgerät abgehender Mobilfunkverbindungen gezeigt. Dabei wird zum Zwecke der nachfolgenden beispielhaften Veranschaulichung davon ausgegangen, daß die Mobilfunkverbindung in einem Mobilfunknetz nach GSM-Standard aufgebaut werden soll, das das CAMEL-Protokoll unterstützt, ohne daß die Erfindung darauf beschränkt wäre. Daher werden nachfolgend die im GSM-Standard üblichen Begriffe verwendet, wie z.B. "Besucherregister" (Visitor Location Register - VLR), wobei für den Fachmann jedoch klar ist, daß es sich dabei nicht notwendigerweise um ein übliches VLR handeln muß, sondern sich vielmehr prinzipiell eine beliebige Datenbank handeln kann, die von einer Vermittlungsstelle beim Rufaufbau daraufhin abgefragt wird, ob der die Verbindung anfragende Teilnehmer überhaupt zur Verwendung des Mobilfunknetzes berechtigt ist. Gleiches gilt mutatis mutandis auch für das sog. Heimatregister.

Die in Fig. 1 gezeigte Anordnung umfaßt eine Mobilfunkvermittlungsstelle MSC, der eine in dieser Anmeldung als Besucherregister VLR bezeichnete Datenbank zugeordnet ist. Wenn sich ein mobiles Endgerät bei der Vermittlungsstelle MSC anmeldet, was üblicherweise automatisch bei Eintritt in den Empfangsbereich der Vermittlungsstelle erfolgt, erfragt das Besucherregister in der Regel bei einer weiteren Datenbank, dem sogenannten Heimatregister (Home Location Register - HLR) bestimmte Daten, die für den Aufbau einer Verbindung zu und von dem Endgerät notwendig sind und speichert diese temporär ab. Der genaue Ablauf dieser Prozedur ist üblicherweise in den Standardspezifikationen des jeweiligen Netzes festgelegt. Selbstverständlich können in besonderen Fällen VLR und HLR ein und dieselbe Datenbank sein.

Rein beispielhaft sind in Fig. 1 ferner drei Kommunikationsendgeräte MS 1, MS 2 und MS 3 gezeigt, bei denen es sich z.B. um ein Mobiltelefon, einen "PDA" (Personal Digital Assistant) mit Mobilfunkfunktion und ein fest eingebautes Autotelefon handeln kann. Alle Geräte befinden sich im Besitz eines Kunden eines Mobilfunkanbieters. In jedem Kommunikationsendgerät ist, wie durch die jeweilige punktierte Linie angedeutet, ein Teilnehmeridentifikationsmodul in Form einer SIM-Karte SIM 1, SIM 2 und SIM 3 angeordnet, wobei die SIM-Karten dem Kunden von dem Mobilfunkanbieter zur Verfügung gestellt werden und im Sinne der Erfindung eine Gruppe von SIM-Karten bilden.

In jeder SIM-Karte ist wenigstens eine Teilnehmeridentifikationsnummer, die sogenannte IMSI (International Mobile Subscriber Identity) gespeichert. In dem erwähnten Heimatregister ist jeder Teilnehmeridentifikationsnummer eine Rufnummer, die sogenannte MSISDN (Mobile Subscriber ISDN Number) zugeordnet. Jeder Rufnummer ist dabei ein bestimmtes Teilnehmerprofil in an sich bekannter und daher hier nicht weiter beschriebener Weise zugeordnet.

Einem der Teilnehmerprofile ist eine Dienstermächtigung, insbesondere in Form einer sogenannten O-CSI (Originating CAMEL Subscription Information) zugeordnet, die die Information enthält, daß der Kunde bestimmte zusätzliche Dienste abonniert hat und entsprechend zur Teilnahme an bestimmten Zusatzdiensten berechtigt ist. Erfindungsgemäß ist dabei insbesondere an sogenannte CAMEL-Dienste (CAMEL - Customized Applications for Mobile networks Enhanced Logic) gedacht, die im GSM-Standard z.B. die Eingabe eines Sonderzeichens wie "*" bei der Anwahl einer Rufnummer gestatten, was dann z.B. zur Unterscheidung zwischen beruflich und privat geführten Telefonaten bei der späteren Abrechnung genutzt werden kann, wie z.B. in der eingangs erwähnten EP 1 091 604 A2 beschrieben.

Nun ist es aufgrund technischer Beschränkungen nicht gewünscht, jedem Teilnehmerprofil die entsprechende Dienstermächtigung zu erteilen. Deswegen schlägt die Erfindung, wie nachfolgend unter Bezugnahme auf Fig. 1 beschrieben, vor, dann, wenn die Anforderung zum Aufbau einer Mobilfunkverbindung unter Verwendung einer SIM-Karte erfolgt, deren über die IMSI und die MSISDN zugeordnetem Teilnehmerprofil die entsprechende Dienstermächtigung fehlt, von einem Besucherregister VLR einer Mobilfunkvermittlungsstelle MSC, in deren Einzugsgebiet die Anforderung zum Rufaufbau erfolgt, für die weiteren Schritte beim Rufaufbau diejenigen Rufnummer (nachfolgend Master-MSISDN genannt) rückzumelden, der das Teilnehmerprofil mit der Dienstermächtigung zugeordnet ist.

Es sei nun zum Zwecke der beispielhaften Beschreibung folgende Konstellation gegeben: der im Endgerät MS 2 befindlichen SIM-Karte SIM 2 sind über die in ihr gespeicherte individuelle IMSI, nachfolgend IMSI 2 genannt, eine MSISDN, nachfolgend MSISDN 2 genannt, und ein Teilnehmerprofil zugeordnet, das nicht die gewünschte Dienstermächtigung aufweist. Der im Endgerät MS 3 befindlichen SIM-Karte SIM 3 sind über die in ihr gespeicherte individuelle IMSI, nachfolgend IMSI 3 genannt, eine MSISDN, nachfolgend MSISDN 3 genannt, und ein Teilnehmerprofil zugeordnet, das nicht die gewünschte Dienstermächtigung aufweist. Der im Endgerät MS 1 befindlichen SIM-Karte SIM 1, nachfolgend Master-SIM genannt, sind über die entsprechende individuelle IMSI, nachfolgend Master-IMSI genannt, eine MSISDN, nachfolgend Master-MSISDN genannt, und ein Teilnehmerprofil zugeordnet, das die gewünschte Dienstermächtigung O-CSI für einen bestimmten Dienst aufweist.

Im durch den Pfeil St 1 angedeuteten ersten Verfahrensschritt wird nach entsprechender Benutzereingabe von dem Endgerät MS 3 über an ein sich bekanntes, hier nicht dargestelltes sogenanntes Basisstationssubsystem (BSS) eine Verbindung mit der Vermittlungsstelle MSC aufgebaut. Dabei wird der Vermittlungsstelle die IMSI 3 übergeben.

Im GSM-Standard besteht eine IMSI aus den drei Ziffernblöcken MCC (Mobile Country Code), MNC (Mobile Network Code) und der MSIN (Mobile Subscriber Identification Number). Der obigen Syntax folgend, werden die entsprechenden Teile der IMSI 3 nachfolgend als MCC 3, MNC 3 und MSIN 3 bezeichnet.

Im Schritt St 2 wird ein Teil der übergebenen IMSI 3, nämlich die MSIN 3 im Besucherregister VLR authentifiziert. Wie oben erwähnt enthält das Besucherregister dazu eine Teilkopie von bestimmten Einträgen in dem Heimatregister HLR.

Findet das Besucherregister VLR ggf. nach Datenabgleich mit dem Heimatregister HLR zu der MSIN 3 einen entsprechenden Eintrag, so gibt es erfindungsgemäß an die Vermittlungsstelle im Schritt St 3 nicht die MSISDN 3, sondern die Master-ISDN zurück. Damit steht für die weiteren Schritte beim Verbindungsaufbau die gewünschte Dienstermächtigung zur Verfügung.

Bei einer bevorzugten Ausführungsform des Verfahrens ist vorgesehen, daß ein Dienst, zu dessen Benutzung die Dienstermächtigung ermächtigt, ein nachfolgend kurz als "DuoBill" bezeichneter Dienst ist, bei dem ein Kunde durch Vorwahl eines vereinbarten Sonderzeichens, z.B. eines "*" bei Eingabe einer Zielrufnummer festlegen kann, daß eine nachfolgend unter Verwendung der eingegebenen Zielrufnummer aufgebaute Mobilfunkverbindung einem anderen Konto belastet werden soll, als es ohne Eingabe des Sonderzeichens erfolgte.

Hat der Kunde nun im in Fig. 1 gezeigten Beispielfall das vereinbarte Sonderzeichen zusammen mit der Zielrufnummer eingegeben, werden nach der Rückmeldung der Master-MSISDN an die Vermittlungsstelle MSC im Verfahrensschritt St 4 die Master-MSISDN und die tatsächliche IMSI der SIM-Karte, über die die Rufaufbauanfrage gestartet wurde, im Beispiel also die IMSI 3 an eine erste Dienstzentrale SCP 1 zur Erzeugung von Abrechnungsdaten übermittelt, wobei dann unter anderem die im GSM-Standard als "Request Report BCSMEvent" (RRB) und "Furnish Charging Information" (FCI) bezeichneten Prozesse ablaufen. und entsprechende Daten im Schritt St 5 an die Vermittlungsstelle MSC übermittelt werden.

Damit wird es vorteilhaft möglich, bei abgehenden Mobilfunkverbindungen durch einfache Eingabe eines bestimmten Codes, z.B. des Sonderzeichens "*" geschäftlich und privat genutzte Verbindungen zwecks gesonderter Abrechnung auch dann zu trennen, wenn das der verwendeten SIM-Karte über IMSI und MSISDN zugeordnete eigentliche Teilnehmerprofil gar nicht über die Ermächtigung zur Nutzung dieses Dienstes verfügt.

In der ersten Dienstzentrale SCP 1 wird dann geprüft, ob die Markierung gesetzt ist. Ist sie nicht gesetzt, werden die Abrechnungsinformationen zur Abrechnung der Mobilfunkverbindung über ein erstes Konto erzeugt. Ist die Markierung gesetzt, kann vorgesehen sein, daß nun Abrechnungsinformationen zur Abrechnung der Mobilfunkverbindung über ein zweites Konto erzeugt werden.

Bei einer besonders vorteilhaften Ausführungsform des Verfahrens ist jedoch vorgesehen, daß die Dienstzentrale SCP 1, dann, wenn die Markierung gesetzt ist, prüft, ob eine Freigabe zur Abrechnung der Mobilfunkverbindung über ein zweites Konto vorliegt, und, wenn nein, automatisch Abrechnungsinformationen zur Abrechnung der Mobilfunkverbindung über das erste Konto erzeugt. Dabei kann das zweite Konto ein sogenanntes Prepaid-Konto sein, mit dem der Kunde im voraus Gespräche bezahlen kann. Üblicherweise wird dann so vorgegangen, daß das erste Konto zur Abrechnung geschäftlich genutzter Verbindungen und das zweite Konto zur Abrechnung privat genutzter Verbindungen verwendet werden.

Bei einer vorteilhaften Ausführungsform kann vorgesehen sein, daß die Master-MSISDN und die tatsächliche Teilnehmeridentifikationsnummer von der Vermittlungsstelle MSC im Verfahrensschritt St 6 an eine zweite Dienstzentrale SCP 2 für weitere Dienste übertragen werden, von welcher die Vermittlungsstelle im Schritt St 7 eine entsprechende Rückmeldung erhält. Dabei handelt es sich i.d.R. um sog. "Intelligent-Network-" oder kurz "IN-Dienste".

Schließlich wird im Schritt St 8 die Verbindung mit der Zielrufnummer hergestellt.

Bei einer besonders bevorzugten Ausführungsform ist vorgesehen, daß sich unter den von einem Mobilfunkanbieter einem Kunden zur Verfügung gestellten SIM-Karten nicht nur "klassische" SIM-Karten befinden, in denen genau eine Teilnehmeridentifikationsnummer gespeichert ist, denen jeweils eine Rufnummer zugeordnet ist, sondern auch wenigstens eine SIM-Karte befindet, bei der auf einem physikalischen Chip zwei logische SIM-Karten abgebildet sind, in denen jeweils eine Teilnehmeridentifikationsnummer gespeichert ist, wobei dabei zweckmäßigerweise vorgesehen ist, daß eine der beiden Teilnehmeridentifikationsnummern die Master-IMSI ist. Damit ergibt sich unter Bezugnahme auf die Fig. 1 das folgende typische Szenario:

In dem Endgerät MS 1 verwendet der Kunde die eben beschriebene spezielle SIM-Karte mit zwei Teilnehmeridentifikationsnummern und demzufolge zwei Rufnummern und zwei Teilnehmerprofilen, die abwechselnd aktiviert werden können, wobei das eine der geschäftlichen Nutzung, das andere der privaten Nutzung dient. Es kann, muß aber nicht vorgesehen sein, daß der Kunde beide Rufnummern kennt und im Wege der Rufnummernübermittlung aktiv verwendet bzw. für Anrufe verwenden läßt. Kennt und verwendet der Kunde beide Rufnummern, kann, muß aber nicht vorgesehen sein, daß bei Aktivierung des privaten Teilnehmerprofils unter der geschäftlichen Rufnummer ankommende Anrufe auf die private Rufnummer weitergeleitet werden und umgekehrt.

Möchte der Kunde bei aktiviertem geschäftlichen Teilnehmerprofil eine Funkverbindung nutzen, die über das private Teilnehmerprofil abgerechnet werden soll, so wählt er zusammen mit der Zielrufnummer das vereinbarte Sonderzeichen, z.B. "*", an vereinbarter Stelle, insbesondere vor oder nach der Zielrufnummer.

Bei den in den weiteren Endgeräten MS 2 und MS 3 verwendeten SIM-Karten SIM 2 und SIM 3 kann es sich um SIM-Karten handeln, in denen genau eine Teilnehmeridentifikationsnummer gespeichert ist. Bevorzugt handelt es sich tatsächlich um ebensolche SIM-Karten. Die den SIM-Karten SIM 2 und SIM 3 zugeordneten Rufnummern sind dem Kunden nicht bekannt. Bei eingehenden Anrufen für die dem Kunden bzw. dessen Anrufern bekannten Rufnummern erfolgt im Heimatregister ein sog. Mapping, so daß alle aktivierten Endgeräte bei eingehendem Anruf gerufen werden. Wie oben ausführlich beschrieben, kann der Kunde dank der Erfindung nun auch bei von den Endgeräten MS 2 und MS 3 abgehenden Anrufen die Funktionalität der getrennten Abrechnung durch einfaches Eingeben eines vereinbarten Sonderzeichens nutzen.

Im Rahmen des Erfindungsgedankens sind zahlreiche Abwandlungen und Weiterbildungen möglich, die sich zum Beispiel auf die Anzahl und die Auswahl von Abrechnungskonten beziehen. So könnte z.B. vorgesehen werden, durch Eingabe eines anderen Sonderzeichens oder eines bestimmten Codes die Trennung kostenpflichtiger abgehender Mobilfunkverbindungen in drei oder mehr Kategorien zu erlauben.

Die Erfindung ermöglicht schließlich auch ein neues Geschäftskonzept, wonach es einem Mobilfunkanbieter möglich ist, einem Kunden, der bereits über eine Anzahl von SIM-Karten verfügt, einen Zusatzdienst anzubieten, nämlich den oben beschriebenen hier kurz "DuoBill" genannten Dienst.

## Patentansprüche

1. Verfahren zum Handhaben eines Rufaufbaus einer von einem mobilen Kommunikationsendgerät (MS) eines Kunden eines Mobilfunkanbleters abgehenden Mobilfunkverbindung in einem Kommunikationsnetz,
- wobei der Kunde über mehrere Teilnehmeridentifikationsmodule (SIM) verfügt, denen jeweils wenigstens eine Teilnehmeridentifikationsnummer zugeordnet Ist,
- wobei jeder Teilnehmeridentifikationsnummer eine Rufnummer zugeordnet ist,
- wobei Jeder Rufnummer ein Teilnehmerprofil zugeordnet ist,
- wobei eines der Teilnehmerprofile eine Dienstermächtlgung zur Teilnahme an bestimmten zusätzlichen Diensten enthält,
**dadurch gekennzeichnet,**
- **daß** bei Anforderung zum Aufbau einer Mobilfunkverbindung von einem Kommunikationsendgerät unter Verwendung einer der zugeordneten Teilnehmeridentifikationsnummem, deren über die Rufnummer zugeordnetes Teilnehmerprofil nicht über die Dienstermächtigung verfügt, von einem Besucherregister (VLR) an eine Mobilfunkvermittlungsstelle (MSC), in deren Einzugsgebiet die Anforderung zum Aufbau der Mobilfunkverbindung erfolgt, für die weiteren Schritte beim Aufbau der Mobilfunkverbindung die im Folgenden als Master-MSISDN bezeichnete Rufnummer rückgemeldet wird, der das Teilnehmerprofil mit der Dienstermächtigung zugeordnet ist.

2. Verfahren nach Anspruch 1, **dadurch gekennzeichnet, daß** nach Rückmeldung der Master-MSISDN an die Vormittlungsstelle die Master-MSISDN und die Teilnehmeridentifikationsnummer, die tatsächlich dem Teilnehmeridentifikationsmodul (SIM), über das die Anforderung zum Aufbau der Mobilfunkverbindung erfolgte, zugeordnet ist, an eine erste Dienstzentrale (SCP 1) zur Erzeugung von Abrechnungsdaten übertragen werden.

3. Verfahren nach Anspruch 2, **dadurch gekennzeichnet, daß** die Master-MSISDN und die Teilnehmeridentifikationsnummer, die tatsächlich dem Teilnehmeridentifikationsmodul (SIM), über das die Anforderung zum Aufbau der Mobilfunkverbindung erfolgte, zugeordnet ist, von der Vermittlungsstelle an eine zweite Dienstzentrale (SCP 2) für weitere Dienste übertragen werden.

4. Verfahren nach einem der Ansprüche 1 bis 3, **dadurch gekennzeichnet, daß** das Teilnehmeridentifikationsmodul, In dem diejenige Teilnehmeridenfifikationanummer gespeichert ist, der die Master-MSISDN zugeordnet ist, als eines von wenigstens zwei, vorzugsweise genau zwei auf einem physikalischen Chip abgebildeten logischen Teilnehmeridentifikationsmodulen, die wahlweise vom Kunden aktiviert werden können und in denen jeweils eine Teilnehmeridentifikationsnummer gespeichert ist, ausgebildet ist.

5. Anordnung zum Handhaben abgehender Mobilfunkverbindungen in einem Mobilfunknetz, umfassend
- wenigstens ein mobiles Kommunikationsendgerät (MS), in weichem sich ein Teilnehmeridentifikationsmodul (SIM) befindet, In dem wenigstens eine Teilnehmeridentifikationsnummer gespeichert ist,
- eine Mobilfunkvermittlungsstelle (MSC), der ein Besucherregister (VLR) zugeordnet ist,
- wobei jeder Teilnehmeridentifikationsnummer eine Rufnummer zugeordnet ist,
- wobei jeder Rufnummer ein Teilnehmerprofil zugeordnet ist,
- wobei eines der Teilnehmerprofile eine Dienstermächtigung zur Teilnahme an bestimmten zusätzlichen Diensten enthält,
**dadurch gekennzeichnet,**
- **daß** in dem Besucherregister eine Eintragung gesetzt ist, welche bewirkt, daß bei Anforderung zum Aufbau einer Mobilfunkverbindung von dem Kommunikationsendgerät unter Verwendung einer der gespeicherten Teilnehmeridentifikationsnummern, deren über die Rufnummer zugeordnetes Teilnehmerprofil nicht über die Dienstermächtigung verfügt, von dem Besucherregister diejenige Im Folgenden als Master-MSISDN bezeichnete Rufnummer an die Mobilfunkvermittlungsstelle zurückgemeldet wird, der das Teilnehmerprofil mit der Dienstermächtigung zugeordnet ist.

6. Anordnung nach Anspruch 5, **dadurch gekennzeichnet, daß** wenigstens eine Dienstzentrale (SCP) vorgesehen ist, die im Falle eines Rufaufbaus von der Mobilfunkvermittlungsstelle die Master-MSISDN und die tatsächlich In dem zum Rufaufbau verwendeten Teilnehmeridentifikationsmodul gespeicherte Teilnehmeridentifikatlonsnummer zur Erzeugung von Abrechnungsinformationen erhält.

7. Verfahren zur Abrechnung abgehender Mobilfunkverbindungen in einem Mobilfunknetz,
- wobei der Rufaufbau einer abgehenden Mobilfunkverbindung gemäß Anspruch 2 erfolgt,
- wobei der Kunde bei der Anforderung zum Aufbau der Mobilfunkverbindung durch Wahl eines Sonderzeichens eine Markierung zur Unterscheidung wenigstens zweier Abrechnungsarten setzen kann,
**dadurch gekennzeichnet,**
- **daß** In der ersten Dienstzentrale (SCP 1) geprüft wird, ob die Markierung gesetzt ist und, wenn nein, die Abrechnungsinformationen zur Abrechnung der Mobilfunkverbindung über ein erstes Konto erzeugt werden.

8. Verfahren nach Anspruch 7, **dadurch gekennzeichnet, daß** die Dienstzentrale (SCP 1) dann, wenn die Markierung gesetzt ist, prüft, ob eine Freigabe zur Abrechnung der Mobilfunkverbindung über ein zweites Konto vorliegt und, wenn nein, automatisch Abrechnungsinformationen zur Abrechnung der Mobilfunkverbindung über das erste Konto erzeugt.

9. Verfahren nach Anspruch 8, **dadurch gekennzeichnet, daß** das zweite Konto ein Prepaid-Konto ist.

10. Anordnung zur Abrechnung von abgehenden Mobilfunkverbindungen in einem Kommunikationsnetz, umfassend eine Anordnung nach Anspruch 6, **dadurch gekennzeichnet, daß** die erste Dienstzentrale (SCP 1) derart ausgebildet ist, daß sie anhand eines vom Kunden bei der Anforderung zum Aufbau einer Mobilfunkverbindung gewählten Sonderzeichens eine Unterscheidung zwischen wenigstens zwei Abrechnungsarten treffen kann.

## Claims

1. A method for handling a call setup of an outgoing wireless connection In a communication network from a mobile communication terminal (MS) of a customer of a mobile communication provider,
- wherein the customer holds several subscriber identification modules (SIM) to each of which Is allocated at least one subscriber identification number,
- wherein a telephone number is allocated to each subscriber identification number,
- wherein a subscriber profile is allocated to each telephone number,
- wherein one of the subscriber profiles Is given a service authorisation to access certain additional services,
**characterised In that**,
- when a request for setting up a wireless connection Is received from a communication terminal, using one of the allocated subscriber Identification numbers the subscriber profile of which does not hold the service authorisation, the next steps for setting up the wireless connection Involve the visitor location register (VLR) redirecting to the mobile switch centre (MSC) In whose catchment area the request for setting up the wireless connection was made, that telephone number (hereinafter called master MSISDN) to which the subscriber profile with the service authorisation has been allocated.

2. The method according to claim 1, **characterised In that**, after the master MSISDN has been forwarded to the switch centre, the master MSISDN and the subscriber Identification number which Is actually allocated to the subscriber Identification module (SIM) from where the request to set up a wireless connection was made, is transmitted to a first service centre point (SCP 1) for generating accounting dates.

3. The method according to claim 2, **characterised In that** the master MSISDN and the subscriber identification number which Is actually allocated to the subscriber identification module (SIM) from where the request to establish a wireless connection was made, is transmitted by the switch centre to a second service centre point (SCP 2) for additional services.

4. The method according to one of the claims 1 to 3, **characterised In that** the subscriber identification module holding the subscriber identification number to which the master MSISDN is allocated, is designed as one of at least two, preferably exactly two, logical subscriber identification modules imaged on a physical chip, with the customer having the option of activating one or the other of such modules each of which is storing one subscriber identification number.

5. An assembly for handling an outgoing wireless connection within a mobile communication network comprising
- at least one mobile communication terminal (MS) which holds a subscriber identification module (SIM) which, In turn, stores at least one subscriber identification number,
- a mobile phone switch centre (MSC) to which a visitor location register (VLR) Is allocated,
- wherein a telephone number is allocated to each subscriber identification number,
- wherein a subscriber profile is allocated to each telephone number,
- wherein one of the subscriber profiles Is given a service authorisation to access certain additional services,
**characterised in that**,
- an entry is made in the visitor location register having the effect that when a request for setting up a wireless connection Is received from a communication terminal using one of the stored subscriber identification numbers the subscriber identification profile of which, allocated thereto via the telephone number, does not hold the service authorisation, the visitor location register directs to the mobile switch centre that telephone number (hereinafter called master MSISDN) to which the subscriber profile with the service authorisation has been allocated.

6. The assembly according to claim 5, **characterised in that** at least one service centre point (SCP) Is provided, which for the purpose of generating accounting information in the event of a call setup, receives from the mobile switch centre the master MSISDN and the actual subscriber Identification number stored In the subscriber identification profile used for setting up the call.

7. A method for accounting outgoing wireless connections within a mobile communication network,
- wherein the call setup of an outgoing wireless connection is established according to claim 2,
- wherein a customer when requesting a wireless connection can, by dialling a special code, set a marker for differentiating between at least two different accounting types,
**characterised in that**,
- the first service centre point (SCP 1) checks whether a marker has been set and, if not, generates the accounting information for charging the wireless connection to a first account.

8. The method according to claim 7, **characterised in that** the service centre point (SCP 1), once a marker has been set, will check whether a release for charging the wireless connection to a second account exists and, if not, will automatically generate accounting Information for charging the wireless connection to a first account.

9. The method according to claim 8, **characterised in that** the second account is a pre-paid account.

10. The assembly for accounting outgoing wireless connections within a mobile communication network comprising an assembly according to claim 6, **characterised in that** the service centre point (SCP 1) is so designed that it can differentiate between at least two types of accounting on the basis of a special code dialled by the customer when requesting a wireless connection to be set up.

## Revendications

1. Procédé de gestion d'un établissement d'appel d'une connexion de téléphonie mobile dans un réseau de communication, qui sort d'un terminal mobil de communication (MS) d'un client d'un fournisseur de téléphonie mobile, dans lequel
- le client dispose d'une pluralité de modules d'identification d'abonné (SIM) auxquels est associé respectivement au moins un numéro d'identification d'abonné,
- à chaque numéro d'identification d'abonné est associé un numéro d'appel,
- à chaque numéro d'appel est associé un profil d'abonné,
- l'un des profils d'abonné comprenant une autorisation de services pour participer à des services supplémentaires déterminés,
**caractérisé par le fait**
- **qu'**en cas de demande de l'établissement d'une connexion de téléphonie mobile depuis un terminal de communication, en utilisant l'un des numéros d'identification d'abonné associés dont le profil d'abonné associé via le numéro d'appel ne dispose pas de ladite autorisation de services, un enregistreur de localisation des visiteurs (VLR) communique en retour, pour les autres étapes lors de l'établissement de la connexion de téléphonie mobile, à un centre de commutation du service mobile (MSC) dans la zone duquel se fait la demande de l'établissement de la connexion de téléphonie mobile, le numéro d'appel qui est qualifié ci-après de master MSISDN et auquel est associé le profil d'abonné avec ladite autorisation de services.

2. Procédé selon la revendication 1, **caractérisé par le fait que**, après avoir communiqué en retour le master MSISDN au centre de commutation, le master MSISDN ainsi que le numéro d'identification d'abonné qui est associé en fait au module d'identification d'abonné (SIM) via lequel la demande de l'établissement de la connexion de téléphonie mobile a été faite, sont transmis à un premier centre de service (SCP 1) en vue de la génération de données de facturation.

3. Procédé selon la revendication 2, **caractérisé par le fait que** le master MSISDN ainsi que le numéro d'identification d'abonné qui est associé en fait au module d'identification d'abonné (SIM) via lequel la demande de l'établissement de la connexion de téléphonie mobile a été faite, sont transmis dudit centre de commutation à un second centre de service (SCP 2) pour d'autres services.

4. Procédé selon l'une quelconque des revendications 1 à 3, **caractérisé par le fait que** le module d'identification d'abonné où est mémorisé le numéro d'identification d'abonné auquel est associé le master MSISDN, est réalisé en tant que l'un d'au moins deux, de préférence exactement deux modules logiques d'identification d'abonné représentés sur une puce physique qui peuvent être activés au choix par le client et dans chacun d'eux est mémorisé un numéro d'identification d'abonné.

5. Ensemble de gestion de connexions sortantes de téléphonie mobile dans un réseau de communication mobile, comprenant
- au moins un terminal mobil de communication (MS) dans lequel se trouve un module d'identification d'abonné (SIM) où est mémorisé au moins un numéro d'identification d'abonné,
- un centre de commutation du service mobile (MSC) auquel est associé un enregistreur de localisation des visiteurs (VLR),
- à chaque numéro d'identification d'abonné étant associé un numéro d'appel,
- à chaque numéro d'appel étant associé un profil d'abonné,
- l'un des profils d'abonné comprenant une autorisation de services pour participer à des services supplémentaires déterminés,
**caractérisé par le fait**
- **que** ledit enregistreur de localisation des visiteurs contient une inscription qui provoque que, en cas de demande de l'établissement d'une connexion de téléphonie mobile depuis ledit terminal de communication, en utilisant l'un des numéros d'identification d'abonné mémorisés dont le profil d'abonné associé via le numéro d'appel ne dispose pas de ladite autorisation de services, ledit enregistreur de localisation des visiteurs communique en retour au centre de commutation du service mobile le numéro d'appel qualifié ci-après de master MSISDN, auquel est associé le profil d'abonné avec l'autorisation de services.

6. Ensemble selon la revendication 5, **caractérisé par le fait qu'**au moins un centre de service (SCP) est prévu qui, dans le cas d'un établissement d'appel, reçoit de la part du centre de commutation du service mobile le master MSISDN ainsi que le numéro d'identification d'abonné mémorisé en fait dans le module d'identification d'abonné mis en oeuvre pour l'établissement d'appel, en vue de la génération d'informations de facturation.

7. Procédé de facturation de connexions sortantes de téléphonie mobile dans un réseau de communication mobile, dans lequel
- l'établissement d'appel d'une connexion sortante de téléphonie mobile se fait selon la revendication 2,
- en cas de demande de l'établissement de la connexion de téléphonie mobile, le client, en choisissant un caractère spécial, peut poser un marquage destiné à distinguer au moins deux modes de facturation,
**caractérisé par le fait**
- **qu'**il est vérifié dans ledit premier centre de service (SCP 1) si ledit marquage est posé et que, si ceci n'est pas le cas, les informations de facturation pour la facturation de la connexion de téléphonie mobile sont générées via un premier compte.

8. Procédé selon la revendication 7, **caractérisé par le fait que** lorsque le marquage est posé, le centre de service (SCP 1) vérifie s'il y a une libération pour facturer la connexion de téléphonie mobile via un deuxième compte et, si ceci n'est pas le cas, il génère automatiquement des informations de facturation pour facturer la connexion de téléphonie mobile via ledit premier compte.

9. Procédé selon la revendication 8, **caractérisé par le fait que** ledit deuxième compte est un compte prépayé.

10. Ensemble de facturation de connexions sortantes de téléphonie mobile dans un réseau de communication, comprenant un ensemble selon la revendication 6, **caractérisé par le fait que** ledit premier centre de service (SCP 1) est réalisé de manière à pouvoir effectuer, à partir d'un caractère spécial choisi par le client lors de la demande de l'établissement d'une connexion de téléphonie mobile, une distinction entre au moins deux modes de facturation.
